# EUROPÄISCHE PATENTSCHRIFT

(11) **EP 0 638 494 B1**
(45) Veröffentlichungstag und Bekanntmachung des Hinweises auf die Patenterteilung: **09.10.1996**
(21) Anmeldenummer: 94110782.3
(22) Anmeldetag: 12.07.1994
(51) Int. Cl.: B65G 69/00

(54) **Dichtung des Spaltes zwischen dem Rand einer Gebäudeöffnung und dem Heck eines andockenden Fahrzeuges**
Seal for the gap between the edge of an aperture in a building and the rear of a vehicle
Joint pour couvrir la fente entre le bord d'une ouverture d'un bâtiment et l'arrière d'un véhicule

(30) Priorität: 11.08.1993 DE 4326872
(43) Veröffentlichungstag der Anmeldung: 15.02.1995
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- EP-A- 0 186 093
- DE-U- 9 107 819
- US-A- 3 772 839
- US-A- 4 885 881

## Beschreibung

Die Erfindung betrifft eine verformbare Dichtung des Spaltes zwischen dem Rand einer Gebäudeöffnung und dem Heck eines andockenden Fahrzeuges mit zu beiden Seiten der Gebäudeöffnung befindlichen, etwa senkrecht verlaufenden, seitliche aussen an senkrechten, in Richtung auf das Gebäude nachgiebig bewegbaren Profilen befestigten Schürzen, deren einander zugekehrte Ränder durch das Fahrzeug unter Verformung eines am unteren Streifenende befindlichen, der Abdichtung dienenden, elastisch verformbaren Widerlagers in Richtung auf das Gebäude abbiegbar sind, wobei das Widerlager zumindest in etwa einen Grundriss nach Art eines rechtwinkeligen Dreiecks aufweist, dessen von den beiden senkrecht aufeinander stehenden Seitenflächen des Widerlagers bestimmte Kante der Ecke zugekehrt ist, die von der Aussenseite des Gebäudes und einer von dem Profil zum Gebäude verlaufenden Seitenplane gebildet ist (siehe zum Beispiel die DE-U-9107819).

Bekannte Dichtungen dieser Ausbildung weisen elastische Widerlager auf, die plattenförmig gestaltet sind, also über ihre gesamte Längen- und Quererstreckung die gleiche Höhe aufweisen. Zwar sind derartige Widerlager verformbar, jedoch sind die Rückstellkräfte gegenüber der Schürze vergleichsweise gross, wenn diese verformt wird. Werden zudem noch das Profil und die Schürze in ihrer Gesamtheit in Richtung auf das Gebäude verdrängt, so tritt eine erhebliche Verhärtung ein.

Aufgrund der Erfindung sollen diese Nachteile beseitigt werden. Die Erfindung strebt somit ein Widerlager für die oben erwähnte verformbare Dichtung an, das sowohl bei Verformungen der Schürze als auch bei Bewegungen des Profils in Richtung auf das Gebäude über eine weiche elastische Verformbarkeit verfügt, um somit eine gesteigerte Abdichtungswirkung am unteren Schürzenrand zu bewirken.

Zur Lösung dieser Aufgabe weist erfindungsgemäss das Widerlager an dem der Kante gegenüberliegenden Grundrissrand im Vergleich zum Kantenbereich eine wesentlich geringere Wandstärke auf, wobei das Widerlager vorzugsweise so gestaltet wird, dass die Wandstärke des Widerlagers allmählich zum Grundrissrand hin abnimmt. Zweckmässigerweise erhält dabei das Widerlager eine Formgebung in der Weise, dass das Widerlager in Richtung senkrecht auf das Gebäude und quer hierzu zumindest im wesentlich dreieckig geformt ist. Daher hat das Widerlager sowohl im Grundriss als auch senkrecht und quer zum Gebäude hin zumindest in etwa eine Dreiecksform.

Ein solches Widerlager ist allein aufgrund seiner Gestaltung besonders verformungswillig, wenn die vorerwähnten Schürzenverformungen eintreten und die Schürze auch noch in Richtung auf das Gebäude verdrängt werden sollte.

Ein so geformtes Widerlager eröffnet auch die Möglichkeit, eine besonders einfache Befestigung des Widerlagers vorzunehmen. Es genügt nämlich, wenn das Widerlager lediglich im Bereich der erwähnten Kante an einem dort befindlichen Profil oder am Gebäude selbst befestigt wird. Diese Befestigung ist deshalb anwendbar, weil das Widerlager im Kantenbereich seine grösste Wandstärke hat und zu seinen freien Rändern hin eine geringer werdende Wandstärke aufweist. Das Widerlager wirkt dann als selbstragendes Element nach Art eines Dreiecksträgers.

Weitere Einzelheiten der Erfindung werden anhand der Zeichnung erläutert, in der ein Ausführungsbeispiel der Erfindung dargestellt ist. Es zeigen :
Fig. 1 eine verformbare Dichtung des Spaltes zwischen dem Rand einer Gebäudeöffnung und dem Heck eines an diese herangefahrenen Fahrzeuges in der Ansicht,
Fig. 2 einen Schnitt nach der Linie II - II von Fig. 1,
Fig. 3 ein Widerlager für die Dichtung nach Fig. 1 und 2 in Richtung des Pfeiles III gesehen und
Fig. 4 einen Teilschnitt nach der Linie IV - IV von Fig. 3.

Das Gebäude 1 hat eine Öffnung 2, an die Fahrzeuge mit dem Heck voran zum Be- und Entladen herangefahren werden können. Zu beiden Seiten der Öffnung 2 befinden sich senkrechte, im rechten Winkel zum Gebäude 1 verlaufende biegsame Seitenplanen 3, die gebäudeseitig über ein Profileisen 30 mit dem Gebäude 1 fest verbunden sind. Am oberen Ende der Seitenplanen 3 ist eine quer verlaufende Dachplane 4 vorgesehen. Diese Planen stellen von Gebäude 1 eine Verbindung her zu einer senkrechten Schürze 5 und einem gardinenartig herabhängenden Schürzenabschnitt 6. Die Verbindung zwischen den Seitenplanen 3 zu den beiden Schürzen 5 erfolgt über ein senkrechtes Profil 50, das durch Lenker od. dgl. vom Gebäude 1 her so geführt ist, dass sich das Profil 5o zusammen mit den Teilen 5 und 3 nachgiebig in Richtung auf das Gebäude 1 bewegen kann, wenn ein Fahrzeug andockt.

Die Bestandteile 3 - 6 bestehen aus einer biegsamen Folie bzw. einem gummierten Gewebe.

In der Öffnung 2 im unteren Abschnitt 7 kann noch eine Verladebrucke angeordnet sein.

Damit Witterungseinflüsse nicht nachteilig werden und Wärme- bzw. Kälteverluste nicht eintreten können, muss das Heck des Fahrzeuges gegenüber dem Gebäude gut abgedichtet sein. Aus diesen Gründen fährt das Fahrzeuge so nahe an das Gebäude 1 heran, dass eine Verformung der Teile 5, 6 eintritt, die sich an das Heck anschmiegen. Dabei schwenken auch die Schürzen 5 türartig nach innen. Damit hierbei auch eine Abdichtung nach unten hin eintreten kann, ist ein verformbares Widerlager 9 vorgesehen; es besteht aus einem weich eingestellten elastischen Kunststoffschaum 10 und einer Umhüllung 11, die eng anliegt, eine Verformung des Widerlagers 9 aber nicht wesentlich behindert.

Das Widerlager 9 hat einen dreieckigen Grundriss nach Art eines rechtwinkeligen Dreiecks unter Bildung von senkrechten, im rechten Winkel zueinander stehenden Seitenflächen 12,13, die eine senkrechte Kante 14 bestimmen. Dabei liegt die eine Seitenfläche 12 parallel zu den Seitenplanen 3, während die Seitenfläche 13 parallel zur Aussenwand des Gebäudes 1 gerichtet ist.

Die Kante 14 wird von einem Winkeleisen 15 umschlossen, das fest mit dem Widerlager 9 verbunden ist. Es dient zur Befestigung des Widerlagers 9 am Winkeleisen 30 z.B. durch Verschrauben. Weitere Befestigungen erübrigen sich.

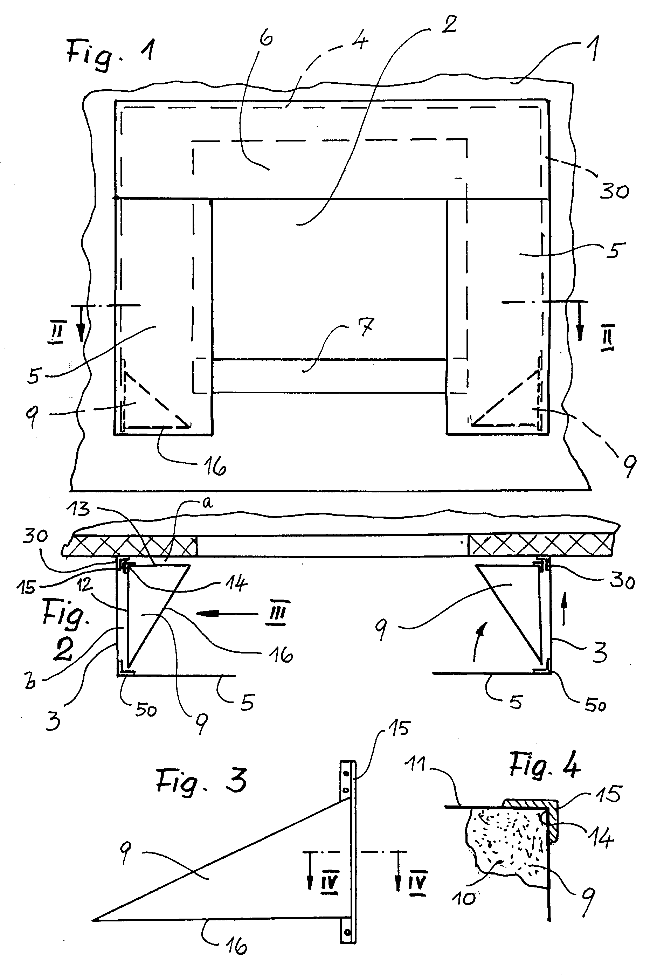

Das Widerlager 9 ist zudem auch in der Ansicht gemäss Fig.1 und in der Ansicht in Richtung des Pfeiles III nach Art eines rechtwinkeligen Dreiecks gestaltet. Damit ergibt sich ein freier, der Kante 14 gegenüberliegender Grundrissrand 16, der spitz ausläuft. Die Wandstärke des Widerlagers 9 vermindert sich somit von der Kante 14 aus zum Grundrissrand 16 hin allmählich.

Werden die beiden Schürzen 5 nach innen verformt und ggfs. dabei auch das Profil 50 in Richtung auf das Gebäude 1 bewegt, so wird zunächst der Grundrissrand 16 verformt, der elastisch weich nachgibt unter guter Abdichtung des unten gelegenen Spaltes.

Es sei erwähnt, dass ein gerader Verlauf des Grundrissrandes 16 nicht unbedingt erforderlich ist; vielmehr kann auch ein bogenförmiger Verlauf genutzt werden, auch unter Abrundung der Grundrisskanten. Zudem erstreckt sich das Widerlager 9 vom Winkeleisen 3o zum Profil 50, während die Seitenfläche 30 im wesentlichen bis an den Rand der Öffnung 2 reicht.

Es sei bemerkt, dass die bei a und b gezeigten Anstände in der Praxis entweder nicht vorhanden sind oder mit der Verformung des Widerlagers 9 überbrückt werden.

## Patentansprüche

1. Verformbare Dichtung des Spaltes zwischen dem Rand einer Gebäudeöffnung (2) und dem Heck eines andockenden Fahrzeuges mit zu beiden Seiten der Gebäudeöffnung (2) befindlichen, etwa senkrecht verlaufenden, seitlich aussen an senkrechten, in Richtung auf das Gebäude (1) nachgiebig bewegbaren Metallprofilen befestigten Schürzen (5), deren einander zugekehrte Ränder durch das Fahrzeug unter Verformung eines innen am unteren Schürzenende befindlichen, der Abdichtung dienenden, elastisch verformbaren Widerlagers (9) in Richtung auf das Gebäude (1) abbiegbar sind, wobei das Widerlager (9) zumindest in etwa einen Grundriss nach Art eines rechtwinkeligen Dreiecks aufweist, dessen von den beiden senkrecht zueinander stehenden Seitenflächen (12,13) des Widerlagers (9) gebildete Kante (14) der Ecke zugekehrt ist, die von der Aussenseite des Gebäudes (1) und einer vom Metallprofil zum Gebäude (1) verlaufenden Seitenplane (3) gebildet ist, dadurch gekennzeichnet, dass das Widerlager (9) an dem der Kante (14) gegenüberliegenden Grundrissrand (16) im Vergleich zum Kantenbereich eine wesentlich geringere Wandstärke aufweist.

2. Dichtung nach Anspruch 1, dadurch gekennzeichnet, dass die Wandstärke zum Grundrissrand (16) allmählich abnimmt.

3. Dichtung nach Anspruch 1 und 2, dadurch gekennzeichnet, dass das Widerlager (9) bei Betrachtung der Dichtung in Andockrichtung zumindest im wesentlichen eine Dreiecksgestalt aufweist.

4. Dichtung nach Anspruch 1 und 2, dadurch gekennzeichnet, dass bei Betrachtung des Widerlagers (9) parallel zur Aussenseite des Gebäudes (1) (Pfeil III ) das Widerlager (9) zumindest im wesentlichen eine Dreiecksgestalt aufweist.

5. Dichtung nach Anspruch 1, dadurch gekennzeichnet, dass das Widerlager (9) lediglich im Bereich seiner Kante (14) befestigt ist.

6. Dichtung nach Anspruch 5, dadurch gekennzeichnet, dass die Kante (14) mit einem in Kantenrichtung verlaufenden, fest mit dem Widerlager verbundenen Profil, insb. einem Metallprofil (15) versehen ist, das der Verankerung des Widerlagers dient.

7. Dichtung nach Anspruch 6, dadurch gekennzeichnet, dass das Profil ein Winkelprofil, bzw. ein Winkeleisen (15) ist, das die Kante (14) umschliesst.

8. Dichtung nach Anspruch 1, dadurch gekennzeichnet, dass sich eine Seitenfläche (12) des Widerlagers (9) im wesentlichen über die Breite der Seitenplane (3) erstreckt.

9. Dichtung nach Anspruch 1, dadurch gekennzeichnet, dass sich eine Seitenfläche (13) des Widerlagers (9) im wesentlichen von der Seitenplane (3) bis an den Rand der Gebäudeöffnung (2) erstreckt.

## Claims

1. Deformable seal for sealing the gap between the edge of a building opening (2) and the rear of a vehicle being positioned thereon, having substantially vertically extending aprons (5) which are situated on both sides of the building opening (2) and are mounted laterally externally on vertical metal profiles, which are resiliently displaceable in a direction towards the building (1), the edges facing one another of said aprons being bendable towards the building (1) by the vehicle so as to deform a resiliently deformable abutment (9), which is situated internally on the lower apron end and serves sealing purposes, the abutment (9) having, at least substantially, a configuration in the form of a right-angled triangle, the edge (14) which is formed by the two lateral faces (12,13) of the abutment (9) lying perpendicular to each other facing the corner which is formed by the outside of the building (1) and a lateral tarpaulin (3), which extends from the metal profile to the building (1), characterised in that the abutment (9) on the outline edge (16) situated opposite the edge (14) has a substantially smaller wall thickness than the edge region.

2. Seal according to claim 1, characterised in that the wall thickness gradually decreases towards the outline edge (16).

3. Seal according to claims 1 and 2, characterised in that the abutment (9) has, at least substantially, a triangular configuration when the seal is viewed with respect to the docking direction.

4. Seal according to claims 1 and 2, characterised in that the abutment (9) has, at least substantially, a triangular configuration when the abutment (9) is viewed parallel to the outside of the building (1) (arrow III).

5. Seal according to claim 1, characterised in that the abutment (9) is only mounted in the region of its edge (14).

6. Seal according to claim 5, characterised in that the edge (14) is provided with a profile, more especially a metal profile (15), which extends in the direction of the edge, is securely connected to the abutment and serves to secure the abutment.

7. Seal according to claim 6, characterised in that the profile is an angular profile, or respectively an angle member (15), which surrounds the edge (14).

8. Seal according to claim 1, characterised in that one lateral face (12) of the abutment (9) extends substantially over the width of the lateral tarpaulin (3).

9. Seal according to claim 1, characterised in that a lateral face (13) of the abutment (9) extends substantially from the lateral tarpaulin (3) to the edge of the building opening (2).

## Revendications

1. Dispositif d'étanchéité déformable de l'intervalle compris entre le bord d'une baie (2) de bâtiment et l'arrière d'un véhicule automobile qui accoste, comportant des jupes (5), qui se trouvent de part et d'autre de la baie (2) de bâtiment, qui s'étendent à peu près verticalement, qui sont fixées latéralement à l'extérieur à des profilés métalliques verticaux, mobiles en pouvant céder en direction du bâtiment (1), et dont les bords tournés l'un vers l'autre peuvent être repliés en direction du bâtiment (1) par le véhicule automobile, en déformant une butée (9) déformable élastiquement, se trouvant à l'extrémité inférieure des jupes et servant à l'étanchéité, la butée (9) ayant pratiquement une projection horizontale du genre d'un triangle rectangle dont l'arête (14), formé par les deux faces (12, 13) à angle droit de la butée (9), est tourné vers le sommet qui est formé par la face extérieure du bâtiment (1) et par un plan (3) latéral s'étendant du profilé métallique au bâtiment (1), caractérisé en ce que la butée (9) a, sur le bord (16) de la projection horizontale opposée à l'arête (14), une épaisseur de paroi sensiblement plus petite que dans la région de l'arête.

2. Dispositif d'étanchéité suivant la revendication 1, caractérisé en ce que l'épaisseur de paroi diminue progressivement en direction du bord (16) de la projection horizontale.

3. Dispositif d'étanchéité suivant la revendication 1 ou 2, caractérisé en ce que la butée (9), en considérant le dispositif d'étanchéité dans la direction d'accostage, a au moins sensiblement une forme triangulaire.

4. Dispositif d'étanchéité suivant la revendication 1 ou 2, caractérisé en ce que, en considérant la butée (9) parallèlement à la face extérieure du bâtiment (1) (flèche III), la butée (9) a au moins sensiblement une forme triangulaire.

5. Dispositif d'étanchéité suivant la revendication 1, caractérisé en ce que la butée (9) n'est fixée que dans la région de son arête (14).

6. Dispositif d'étanchéité suivant la revendication 5, caractérisé en ce que l'arête (14) est munie d'un profilé, notamment un profilé (15) métallique, qui s'étend dans la direction de l'arête, qui est relié solidement à la butée et qui sert à ancrer la butée.

7. Dispositif d'étanchéité suivant la revendication 6, caractérisé en ce que le profilé est une cornière, ou un fer (15) à cornière, qui entoure l'arête (14).

8. Dispositif d'étanchéité suivant la revendication 1, caractérisé en ce qu'une face (12) de la butée (9) s'étend sensiblement sur la largeur du plan (3) latéral.

9. Dispositif d'étanchéité suivant la revendication 1, caractérisé en ce qu'une face (13) de la butée (9) s'étend sensiblement du plan (3) latéral au bord de la baie (2) du bâtiment.
